# EUROPÄISCHE PATENTSCHRIFT

(11) **EP 4 287 818 B1**
(45) Veröffentlichungstag und Bekanntmachung des Hinweises auf die Patenterteilung: **30.10.2024**
(21) Anmeldenummer: 22723347.5
(22) Anmeldetag: 13.04.2022
(51) Int. Cl.: A01F 15/08, B60K 6/10

(54) **ANTRIEBSSTRANGBAUGRUPPE ZUM ANTREIBEN EINES ARBEITSAGGREGATS MIT SCHWANKENDER LAST**
POWERTRAIN FOR DRIVING A WORKING UNIT WITH VARYING LOAD
CHAINE D'ENTRAINEMENT POUR GROUPE DE TRAVAIL AVEC CHARGE VARIABLE

(30) Priorität: 16.04.2021 DE 102021109650; 22.06.2021 DE 102021116061
(43) Veröffentlichungstag der Anmeldung: 13.12.2023
(73) Patentinhaber: Liebherr-Components Biberach GmbH, 88400 Biberach an der Riß (DE)
(72) Erfinder: FÜHRLE, David, 88487 Mietingen (DE); SCHINDLER, Viktor, 88524 Uttenweiler (DE); BINDER, Stefan, 89231 Neu-Ulm (DE); HAUSLADEN, Norbert, 88400 Biberach (DE)
(74) Vertreter: Thoma, Michael
(86) Internationale Anmeldenummer: PCT/EP2022/059845
(87) Internationale Veröffentlichungsnummer: WO 2022/219030

(56) Entgegenhaltungen:
- EP-A1- 3 735 819
- US-A- 5 894 718
- US-A- 6 105 353
- US-A1- 2021 015 049

## Beschreibung

Die vorliegende Erfindung betrifft allgemein Arbeitsmaschinen mit Arbeitsaggregaten, die schwankenden Lasten unterworfen sind bzw. eine schwankende Leistungsaufnahme besitzen. Die Erfindung betrifft dabei einerseits eine Antriebsstrangbaugruppe zum Antreiben eines solchen Arbeitsaggregats mit schwankender Leistungsaufnahme von einer Antriebsquelle her, mit einem Schwungradspeicher zum Abmildern von Laststößen oder -schwankungen, sowie einer Anfahrhilfe zum erleichterten Anfahren eines Sollbetriebsdrehzahlbereichs des Schwungradspeichers. Die Erfindung betrifft andererseits eine Arbeitsmaschine, die ein Antriebsaggregat mit schwankender Leistungsaufnahme und die genannte Antriebsstrangbaugruppe mit einem Schwungradspeicher und Anfahrhilfe umfasst.

Bei verschiedenen Arbeitsaggregaten treten bisweilen so starke Schwankungen in der Last bzw. der Leistungsaufnahme auf, dass die Antriebsquelle eine signifikante Drehzahlveränderung erfährt und einen insgesamt ruckelnden Betrieb der Arbeitsmaschine zur Folge hat, da die Antriebsquelle selbst entsprechende Drehmomentstöße nicht ohne weiteres abfangen bzw. kompensieren kann. Beispielsweise zeigen diverse landwirtschaftliche Arbeitsaggregate solche größeren Last- bzw. Leistungsaufnahmeschwankungen, die vom mechanischen Aufbau bzw. der Arbeitsweise des Arbeitsaggregats selbst herrühren oder auch durch schwankende äußere Belastungen verursacht sein können.

Solche von der Arbeitsweise herrührenden Schwankungen der Leistungsaufnahmen zeigen beispielsweise Rechteck-Ballenpressen, bei denen ein Stopfer periodisch in eine Presskammer gedrückt wird, um das Erntegut zu rechteckigen Ballen zu pressen. Ähnliche, von schwankenden äußeren Belastungen herrührende Leistungsaufnahmeschwankungen zeigen auch Häckseltrommeln von Feldhäckslern oder Drescheinrichtungen eines Mähdreschers, oder auch das Schneidwerk einer Rundballenpresse, wenn der zugeführte Erntegutstrom stärker schwankt.

Werden solche Arbeitsaggregate über eine Zapfwelle von einem Schlepper her angetrieben, führen Drehzahlschwankungen des Antriebsmotors des Schleppers, die von den Leistungsaufnahmeschwankungen des Arbeitsaggregats induziert werden, nicht nur zu einem ungleichmäßigen Betrieb des Arbeitsaggregats selbst, sondern auch zu einem ruckelnden Fahrbetrieb des Schleppers, da der Antriebsmotor des Schleppers nicht nur als Zapfwellenantrieb, sondern auch als Fahrantrieb dient. Bei den besagten Rechteck-Ballenpressen kann dies dazu führen, dass der Schlepper bei jedem Stößelhub der Ballenpresse einnickt, was nicht nur für den Fahrer unangenehm ist, sondern auch zu erhöhtem Verschleiß an den Bauteilen führen und die Motorlebensdauer beeinträchtigen kann.

Um die Auswirkungen der Last- bzw. Leistungsaufnahmeschwankungen des Arbeitsaggregats auf den Antriebsmotor abzumildern, wurden bereits verschiedene Maßnahmen angedacht. Beispielsweise schlägt die Schrift EP 3 298 872 B1 eine Steuerung vor, die Schwankungen in der Leistungsaufnahme des Arbeitsaggregats erfasst bzw. vorausschauend abschätzt. Die Drehzahländerungen des Antriebsmotors werden kompensiert, umeine letztlich gleichmäßige Fahrgeschwindigkeit des Schleppers zu erzielen. Bei dieser Lösung wird gar nicht erst versucht, die Drehzahlschwankungen des Antriebsmotors durch die schwankende Leistungsaufnahme des Arbeitsaggregats zu verhindern bzw. abzumildern, sondern sozusagen die Auswirkung der Drehzahlschwankungen des Antriebsmotors durch intelligente Ansteuerung des Dieselmotors auszugleichen, vgl. auch EP 3 735 819 A1, die dies über angebundene elektrische Maschinen versucht.

Ein anderer Ansatz besteht darin, im Antriebsstrang, der das Arbeitsaggregat antreibt, einen Schwungradspeicher vorzusehen, dessen kinetische Energie die Last- bzw. Leistungsaufnahmeschwankungen des Arbeitsaggregats bzw. deren Folgen abmildert, vgl. US 6,105,353 A und US 5,894,718 A. Beispielsweise kann ein solcher Schwungradspeicher im Antriebsstrang einer Rechteck-Ballenpresse die punktuell bzw. zyklisch notwendige, hohe Energie beim Einschieben des Stopfers in die Presskammer glätten, um den Einfluss auf den Schlepper abzumildern und Nickbewegungen bzw. eine ruckelnde Fahrgeschwindigkeit zu vermeiden.

Um eine möglichst gute Glättung der punktuellen bzw. zyklischen Energieschwankungen zu erzielen, ist es allerdings notwendig, dass der Schwungradspeicher eine ausreichend hohe kinetische Energie zur Verfügung stellen kann. Hierzu wäre es an sich einfach, die Schwungmasse des Schwungradspeichers zu erhöhen, wobei diese Maßnahme allerdings aus verschiedenen Gründen Beschränkungen unterliegt. Einerseits kann die Schwungmasse selbst nicht beliebig vergrößert werden, da üblicherweise der zur Verfügung stehende Bauraum begrenzt ist und auch auf das Baugewicht zu achten ist.

Insofern wurde andererseits bereits angedacht, die kinetische Energie des Schwungradspeichers durch Erhöhen von dessen Drehzahl anzuheben, da die kinetische Energie des Schwungradspeichers von dessen Winkelgeschwindigkeit abhängt. Genauer gesagt geht die Winkelgeschwindigkeit im Quadrat in die kinetische Energie ein, und zwar gemäß der Formel Eₖᵢₙ=1/2*Jₒ*ω², wobei Jₒ das Massenträgheitsmoment und ω die Winkelgeschwindigkeit ist.

Andererseits sind einer solchen Erhöhung der kinetischen Energie des Schwungradspeichers aber auch dadurch Grenzen gesetzt, dass die Antriebsquelle beispielsweise in Form des Antriebsmotors des Schleppers nicht das notwendige Drehmoment bereitstellen kann, um den Schwungradspeicher hochzufahren. Um dieser Problematik zu begegnen, behilft man sich bisweilen mit einer Rutschkupplung, die der Schwungmasse vorgeschaltet ist, um die zur Verfügung stehende Antriebsleistung allmählich in die Schwungmasse einzuleiten, wodurch sich die Hochlaufzeit des Schwungradspeichers entsprechend verlängert. Die Schwungmasse wird hierdurch allmählich auf die gewünschte Sollbetriebsdrehzahl gebracht, so dass der Antriebsmotor nicht abgewürgt wird. Allerdings muss eine solche Rutschkupplung hierfür ausreichend dimensioniert werden, um die in der Rutschzeit entstehende Energie aufnehmen zu können, was bei beengten Einbau- bzw. Umgebungsverhältnis nicht ohne weiteres möglich ist.

Der vorliegenden Erfindung liegt daher die Aufgabe zugrunde, eine verbesserte Antriebsstrangbaugruppe der genannten Art und eine verbesserte Arbeitsmaschine mit einer solchen Antriebsstrangbaugruppe zu schaffen, die Nachteile des Stands der Technik vermeiden und letzteren in vorteilhafter Weise weiterbilden. Insbesondere soll der Schwungradspeicher ausreichend Energie zur Glättung der Leistungsaufnahmeschwankungen des Arbeitsaggregats bei begrenztem Bauraum bereitstellen können, ohne die Antriebsquelle zu überfordern oder beim Hochfahren gar abzuwürgen.

Erfindungsgemäß wird die genannte Aufgabe durch eine Antriebsstrangbaugruppe gemäß Anspruch 1 sowie eine Arbeitsmaschine gemäß Anspruch 14 gelöst. Bevorzugte Ausgestaltungen der Erfindung sind Gegenstand der abhängigen Ansprüche.

Es wird also vorgeschlagen, den Schwungradspeicher über ein in den Drehzahlen bzw. im Übersetzungsverhältnis variables Planetengetriebe zu betreiben, um die Drehzahl des Schwungradspeichers je nach Betriebssituation an die Antriebsquelle und/oder die Leistungsaufnahme des Arbeitsaggregats anpassen zu können. Die Drehzahlvariabilität ist vor allem zum Hochfahren der Schwungmasse vorteilhaft. Bei laufendem Betrieb kann je nach Auslegung die feste Übersetzung genutzt werden. Erfindungsgemäß umfasst die Anfahrhilfe zum erleichterten Hochfahren des Schwungradspeichers in dessen Sollbetriebsdrehzahlbereich ein mit dem Schwungradspeicher antriebsverbundenes Planetengetriebe, das zumindest eine mit dem Schwungradspeicher antriebsverbundene Planetengetriebestufe aufweist.

Vorteilhafterweise umfasst die Anfahrhilfe zusätzlich zu dem mit dem Schwungradspeicher antriebsverbundene Planetengetriebe einen Stell- bzw. Antriebs- und/oder Bremsaktor zum Abbremsen und/oder Beschleunigen eines Planetengetriebeelements zum Verstellen des Über-/Untersetzungsverhältnisses des Planetengetriebes beim Hochfahren des Schwungradspeichers.

Durch Verstellen der Drehzahl des genannten Planetengetriebeelements kann dessen Über-/Untersetzungsverhältnis einerseits beim Hochfahren des Schwungradspeichers so eingestellt werden, dass die Antriebsquelle nicht überfordert wird, während andererseits die Drehzahl des Schwungradspeichers für den Arbeitsbetrieb so eingestellt werden kann, dass zur Glättung der Leistungsaufnahmeschwankungen des Arbeitsaggregats vom Schwungradspeicher ausreichend kinetische Energie bereitgestellt werden kann. Insbesondere kann die Drehzahl des Schwungradspeichers für die besagte Glättung ausreichend weit erhöht werden, um die kinetische Energie auf das benötigte Maß zu heben. Im günstigsten Fall kann dann die Drehzahlverstelleinheit vom laufenden Schwungradspeicher entkoppelt (Kupplung an der Pumpe, Bremse an Motor) werden. Somit kann der Wirkungsgrad der Antriebsbaugruppe erhöht werden.

Das an den Schwungradspeicher angebundene Planetengetriebe und dessen Verstellbarkeit hinsichtlich des Übersetzungsverhältnisses kann aber nicht nur als Anfahrhilfe genutzt werden, sondern auch die Pufferwirkung des Schwungradspeichers verfeinern und besser an Schwankungen der Leistungsaufnahme des Arbeitsaggregats anpassen. Nach einem weiteren Aspekt der vorliegenden Erfindung kann eine Steuereinrichtung den Antriebs- und/oder Bremsaktor zum Abbremsen und/oder Beschleunigen des Planetengetriebeelements und damit Verstellen des Über-/Untersetzungsverhältnisses in Abhängigkeit von Leistungsaufnahmeschwankungen des Arbeitsaggregats derart ansteuern bzw. betätigen, dass in Phase niedrigerer Leistungsaufnahme des Arbeitsaggregats der Schwungradspeicher beschleunigt und damit dessen kinetische Energie erhöht wird und in Phasen höherer Leistungsaufnahme des Arbeitsaggregats der Schwungradspeicher Drehzahl verlieren kann derart, dass über die genannten Phasen niedrigerer und höherer Leistungsaufnahme hinweg eine Eingangsdrehzahl und/oder ein Eingangsmoment an einer von der Antriebsquelle herkommenden Eingangswelle des Planetengetriebes zumindest näherungsweise gleich bleibt. Die Steuereinrichtung hält also das Über-/Untersetzungsverhältnis des Planetengetriebes gemäß diesem Aspekt der Erfindung auch im Arbeitsbetrieb nicht konstant, sondern verändert es insbesondere zyklisch auf und ab, um den Schwungradspeicher entsprechend der Leistungsaufnahmeschwankungen des Arbeitsaggregats zu beschleunigen und abzubremsen und dadurch dessen kinetische Energie zu erhöhen und zu ermäßigen, um die Leistungsaufnahmeschwankungen des Arbeitsaggregats feiner zu kompensieren und von der Antriebsquellenseite des Planetengetriebes möglichst fern zu halten, um keine Auswirkungen auf die Antriebsquelle zu haben. Insbesondere kann der Schwungradspeicher durch Verstellen des Über-/Untersetzungsverhältnisses des Planetengetriebes derart beschleunigt und abgebremst werden, dass die Summe der kinetischen Energie des Schwungradspeichers und die schwankende Energieaufnahme des Arbeitsaggregats näherungsweise konstant bleibt.

Insbesondere kann die Steuereinrichtung das Planetengetriebeelement derart beschleunigen bzw. abbremsen, dass die Summe der Drehmomente an der mit der Antriebsquelle verbundenen Eingangswelle des Planetengetriebes, an dem mit dem Antriebs- und/oder Bremsaktor verbundenen Planetengetriebeelement und an der mit dem Arbeitsaggregat verbundenen Getriebeausgangswelle zumindest näherungsweise im Gleichgewicht bleibt, insbesondere gegen Null geht.

Die genannte Steuereinrichtung kann insbesondere dazu ausgebildet sein, bei einer zyklisch schwankenden Leistungsaufnahme des Arbeitsaggregats das Planetengetriebeelement, das die Drehzahl des Schwungradspeichers beeinflusst bzw. steuert, ebenfalls zyklisch entsprechend dem Schwankungszyklus der Leistungsaufnahme zu verstellen und den Schwungradspeicher entsprechend zyklisch zu beschleunigen und zu verlangsamen. Ist das Arbeitsaggregat beispielsweise eine Rechteck-Ballenpresse, folgt die Leistungsaufnahme des Arbeitsaggregats der Bewegung des Stopfers in die Pressenkammer und damit dem Zyklus der Kurbelwellenbewegung, an die der Stopfer angebunden ist. Da beim Zusammenpressen des Strohballens die hohe Presskraft und somit auch die dafür notwendige Energie nur sehr punktuell, beispielsweise über nur etwa 10 Winkelgrad, benötigt wird, kann bei einer Drehung der Stopfer-Kurbelwelle über die restlichen 350 Winkelgrad die Schwungmasse durch Verstellen des Planetengetriebes beschleunigt und schneller getrieben werden, indem der Antriebs- und/oder Bremsaktor das Planetengetriebeelement entsprechend beschleunigt, so dass der Schwungradspeicher hinsichtlich seiner Drehzahl sozusagen überdreht und überschüssige kinetische Energie erhält, die dann für den kurzen Augenblick des Pressens wieder abgegeben werden kann. Im weiteren Verlauf kann dann über die nächsten 350 Winkelgrad bzw. die nächste Phase niedrigerer Leistungsaufnahme wieder Energie durch Beschleunigen des Schwungradspeichers gesammelt werden. Ein solches zyklisches Verstellen des Planetengetriebes und damit einhergehend zyklisches Beschleunigen und Verlangsamen des Schwungradspeichers kann eine zusätzliche Entlastung und bessere Gleichförmigkeit der Antriebswelle erreicht werden.

Die Steuereinrichtung kann das Hin- und Herverstellen des Planetengetriebes im Arbeitsbetrieb, insbesondere um einen Arbeitspunkt herum bzw. in einem bestimmten Drehzahlbereich des Schwungradspeichers in Abhängigkeit verschiedener Betriebsparameter vornehmen bzw. die Leistungsaufnahmeschwankungen in verschiedener Weise bestimmen. Beispielsweise kann die Steuereinrichtung mit einer Erfassungseinrichtung zusammenarbeiten, die die Leistungsaufnahme des Arbeitsaggregats und/oder ein Drehmoment und/oder eine Stellkraft am Arbeitsaggregat oder an einer Planetengetriebeausgangswelle direkt erfassen kann, beispielsweise mittels eines Kraftsensors und/oder eines Dehnungsmessstreifens oder einer anderen, geeigneten Sensorik, mit der relevante Betriebsgrößen gemessen werden können. Bei einer Ballenpresse kann beispielsweise ein Druck in der Ballenpresskammer erfasst werden und/oder eine Stellung eines Ballenformelements.

Bei Leistungsaufnahmeschwankungen, die zyklisch auftreten und/oder von der Betriebsweise des Arbeitsaggregats abhängen bzw. davon geprägt werden, können auch andere repräsentative Größen bestimmt werden, anhand derer die Steuereinrichtung das Planetengetriebe verstellen kann. Beispielsweise kann mittels eines Positionssensors die Stellung des Arbeitsaggregats, beispielsweise die Position des Stopfers in der Pressenkammer erfasst werden, oder es kann mittels eines Drehgebers die rotatorische Stellung der Stopfer-Kurbelwelle erfasst werden, um das Planetengetriebe in Abhängigkeit der Stopferstellung und/oder des Kurbelwellendrehwinkels zu verstellen.

Alternativ oder zusätzlich kann bei einer zyklischen Schwankung der Leistungsaufnahme aber auch einfach eine Zeitsteuerung vorgesehen werden. Beispielsweise kann eine Schwankungsperiode erfasst oder bestimmt werden, beispielsweise in Form eines schleifend bestimmten Mittelwerts, um dann in bestimmten Abschnitten der jeweiligen Periode eine bestimmte Verstellung des Planetengetriebes vorzusehen bzw. diese zeitlich abhängig zu steuern.

Der Antriebs- und/oder Bremsaktor zum Verstellen des Planetengetriebes kann grundsätzlich verschieden ausgebildet sein, wobei vorteilhafterweise der Antriebs- und/oder Bremsaktor in das Planetengetriebe integriert und/oder am Planetengetriebeelement selbst angebunden sein kann.

Insbesondere kann der genannte Antriebs- und/oder Bremsaktor einen hydraulischen oder elektrischen Antriebs- und/oder Bremsmotor umfassen, der das genannte Planetengetriebeelement, das die Drehzahl des Schwungradspeichers bzw. das Übersetzungsverhältnis zwischen Planetengetriebeeingangswelle und Schwungradspeicher beeinflussen kann, in gewünschter Weise beschleunigen und/oder abbremsen kann, um in der genannten Weise als Teil der Anfahrhilfe den Schwungradspeicher allmählich hochzufahren und/oder bei den betrieblichen Leistungsaufnahmeschwankungen des Arbeitsaggregats in dessen Arbeitsbetrieb gezielt den Schwungradspeicher zu beschleunigen, um für benötigte Leistungspeaks eine erhöhte kinetische Energie zu haben.

Für bestimmte Anwendungszwecke könnte es jedoch auch ausreichend sein, als Antriebs- und/oder Bremsaktor nur eine Bremse beispielweise in Form einer Backen- oder Scheibenbremse vorzusehen, die das Planetengetriebeelement für eine gewünschte Verstellung des Über-/Untersetzungsverhältnisses abbremsen kann. Dies wäre beispielsweise für eine reine Anfahrhilfe ausreichend, bei der das vom Antriebs- und/oder Bremsaktor beeinflussbare Planetengetriebeelement zunächst sozusagen frei durchdrehen kann, wenn die Antriebsquelle läuft, und dann peu a peu abgebremst wird, um den Schwungradspeicher auf dessen Arbeitsdrehzahlbereich hochzufahren.

Vorteilhafterweise kann der Antriebs- und/oder Bremsaktor jedoch, ggf. auch zusätzlich zu einer solchen Bremse, einen Antriebs- und/oder Bremsmotor umfassen, der in seiner Drehzahl gesteuert werden kann, um die Drehzahl des genannten Planetengetriebeelements ggf. auch beschleunigen zu können, wobei mittels eines solchen Antriebs- und/oder Bremsmotors aber auch ein Abbremsen des Planetengetriebeelements bewerkstelligt werden kann, wenn der Motor im Bremsbetrieb betrieben wird.

Ein solcher Antriebs- und/oder Bremsmotor kann in verschiedener Weise mit Antriebsenergie versorgt werden, beispielsweise von einer Pumpe oder einem Generator, die von der Antriebsquelle direkt angetrieben werden kann, oder aus einem Druck- oder Batteriespeicher.

In vorteilhafter Weiterbildung der Erfindung kann der genannte Antriebs- und/oder Bremsmotor auch durch eine Pumpe oder einen Generator mit Druckfluid bzw. Strom versorgt werden, die bzw. der an das Planetengetriebe selbst angebunden, insbesondere an eine Planetengetriebeeingangswelle getrieblich angebunden sein kann, so dass die Planetengetriebeeingangswelle die genannte Pumpe bzw. den genannten Generator antreibt. Insbesondere kann die Pumpe bzw. der Generator in das Planetengetriebe integriert sein bzw. in oder am Gehäuse des Planetengetriebes montiert sein.

Die Anbindung der Pumpe bzw. des Generators an die Planetengetriebeeingangswelle kann über eine geeignete Getriebestufe erfolgen, beispielsweise ein Stirnradgetriebe.

Alternativ zu einer Anbindung an die Planetengetriebeeingangswelle bzw. das Planetengetriebeeingangselement kann die genannte Pumpe bzw. der genannte Generator aber auch auf der Abtriebsseite des Planetengetriebes angebunden sein, beispielsweise einen Wellenabschnitt, der vom Planetengetriebe zum Arbeitsaggregat führt.

Das Planetengetriebe umfasst einen Durchtrieb, der unter Umgehung der Planetengetriebestufe zur Steuerung der Drehzahl des Schwungradspeichers von der Planetengetriebeeingangsseite zur Abtriebswelle führt, die vom Planetengetriebe zum Arbeitsaggregat führt. Der Schwungradspeicher ist über die besagte Planetengetriebestufe gegenüber dem genannten Durchtrieb verzweigt und kann dementsprechend in seiner Drehzahl gegenüber der Antriebsdrehzahl des zum Arbeitsaggregat führenden Antriebsstrangteils variiert werden.

Der genannte Durchtrieb, der an der Planetengetriebestufe zum Anbinden des Schwungradspeichers vorbeiführt, kann in Form einer Durchgangswelle und somit übersetzungsfrei durch das Planetengetriebe hindurchführen, sodass die Planetengetriebeeingangswelle dieselbe Drehzahl hat wie die zum Arbeitsaggregat führende Ausgangswelle. Alternativ kann der genannte Durchtrieb aber sehr wohl eine Über- oder Untersetzungsstufe aufweisen, beispielsweise in Form einer zweiten Planetengetriebestufe oder einer Stirnradgetriebestufe. Vorteilhafterweise kann auch in diesem Fall über die erstgenannte Planetengetriebestufe die Drehzahl des Schwungradspeichers gegenüber der Drehzahl des Durchtriebs, sei es auf der Eingangsseite oder auf der Ausgangsseite, variiert werden.

In Weiterbildung der Erfindung kann das Planetengetriebe einstufig ausgebildet sein bzw. nur eine Planetengetriebestufe umfassen, die von der Getriebeeingangswelle angetrieben wird und ausgangsseitig den Schwungradspeicher antreiben kann.

Der genannte Schwungradspeicher kann vorteilhafterweise in das Planetengetriebe integriert, insbesondere innerhalb eines gemeinsamen Getriebe- und Schwungradgehäuses angeordnet sein.

Grundsätzlich kann die Zuordnung der Getriebeelemente der genannten Planetengetriebestufe zu den relevanten Komponenten wie Schwungradspeicher, Antriebs- und/oder Bremsaktor und/oder Eingangs- und/oder Ausgangswelle unterschiedlich sein.

Gemäß einer vorteilhaften Ausführung der Erfindung kann die Getriebeeingangswelle an ein Hohlrad der den Schwungradspeicher anbindenden Planetengetriebestufe angebunden sein, sodass das genannte Hohlrad mit der Eingangsdrehzahl rotiert. In diesem Fall kann die zuvor genannte Pumpe bzw. der Generator an das genannte Hohlrad angebunden sein, beispielsweise über eine geeignete Zwischengetriebestufe.

Der Schwungradspeicher kann vorteilhafterweise an das Sonnenrad der Planetengetriebestufe angebunden sein, sodass das Über-/Untersetzungsverhältnis zum Schwungradspeicher durch Abbremsen und/oder Beschleunigen des Stegs bzw. des Planetenträgers gesteuert werden kann. Insbesondere kann auf den genannten Planetenträger bremsend eingewirkt werden, um den Schwungradspeicher allmählich anlaufen zu lassen. Alternativ oder zusätzlich kann im an sich hochgefahrenen Arbeitsbetrieb des Schwungradspeichers der Planetenträger beschleunigt und/oder abgebremst werden, um in der beschriebenen Weise zyklische oder andere Schwankungen der Leistungsaufnahme des Arbeitsaggregats feiner auszugleichen.

Die vorgenannte Durchtriebswelle, die eingangsseitig mit der Getriebeeingangswelle verbunden sein bzw. diese bilden kann und ausgangsseitig mit der Abtriebswelle verbunden sein bzw. diese bilden kann, kann drehfest mit dem Hohlrad der Planetenstufe verbunden sein und sich durch das Sonnenrad hindurch erstrecken, wobei Hohlrad und Durchgangswelle drehbar aneinander abgestützt und/oder auch separat voneinander am Getriebegehäuse abgestützt sein können.

Zum Abbremsen und/oder Beschleunigen und/oder Festhalten des das Übersetzungsverhältnis steuernden Planetengetriebeelements, insbesondere des vorgenannten Planetenträgers, kann der genannte Antriebs- und/oder Bremsaktor, insbesondere der vorgenannte elektrische oder hydraulische Antriebsmotor, über eine Getriebestufe beispielsweise in Form einer Stirnradgetriebestufe an das genannte Planetengetriebeelement angebunden sein. Beispielsweise kann der Planetenträger ein Antriebsrad aufweisen, das sich zwischen dem Schwungradspeicher und der Planetenstufe erstrecken kann und unabhängig hiervon mit einem Ritzel bzw. einem Antriebsrad kämmen kann, an das der genannte Antriebs- und/oder Bremsaktor angebunden sein kann.

Um eine kompakte, platzsparende Bauweise zu erzielen, können der Antriebs- und/oder Bremsaktor und der Schwungradspeicher zu verschiedenen Stirnseiten des Planetengetriebes hin angeordnet sein und/oder auf verschiedenen Seiten der Planetengetriebestufe angeordnet sein, über die dann der Schwungradspeicher an den Antriebsstrang angebunden ist. Beispielsweise kann der Antriebs- und/oder Bremsaktor an einem seitlichen Endabschnitt des Planetengetriebes vorgesehen sein, der dessen Eingangsseite bildet, während der Schwungradspeicher an einem Endabschnitt des Planetengetriebes vorgesehen sein kann, der dessen Abtriebsseite bildet.

Die Erfindung wird nachfolgend anhand bevorzugter Ausführungsbeispiele und zugehörigen Zeichnungen näher erläutert. In den Zeichnungen zeigen:

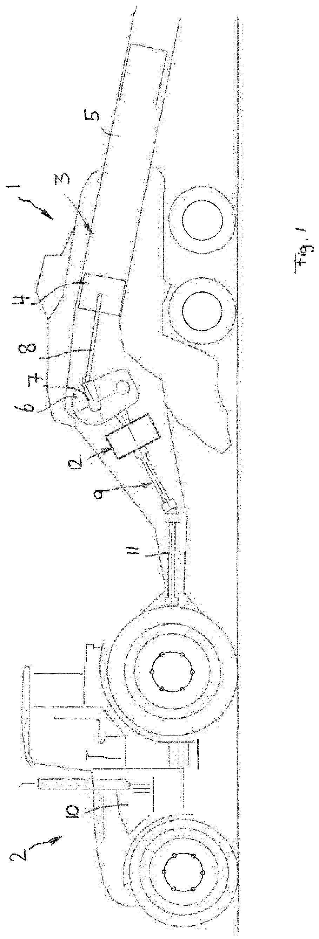

- Fig. 1:: eine Arbeitsmaschine mit einem Antriebsstrang, der einen über ein Planetengetriebe angebundenen Schwungradspeicher aufweist, nach einer vorteilhaften Ausführung der Erfindung, wobei die Arbeitsmaschine in Form einer Ballenpresse ausgebildet ist und der Antriebsstrang über eine Zapfwelle an einen Schlepper, der die Antriebswelle bildet, angebunden ist,

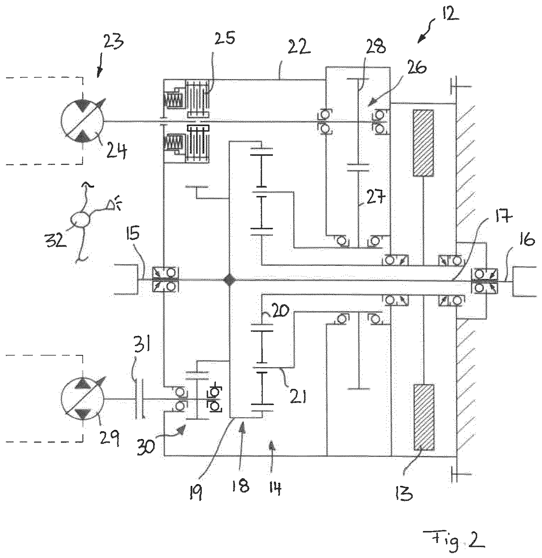

- Fig. 2:: eine Schnittansicht des Antriebsstrangs der Arbeitsmaschine aus Fig. 1 im Bereich des Schwungradspeichers und des Planetengetriebes, wobei gemäß einer vorteilhaften Ausführung der Erfindung ein Antriebsmotor zum Abbremsen und Beschleunigen eines Planetengetriebeelements zum Verändern des Über-/Untersetzungsverhältnisses zum Schwungradspeicher hin vorgesehen und eine Pumpe oder ein Generator zum Versorgen des Antriebsmotors an ein Eingangselement der Planetenstufe angebunden ist,

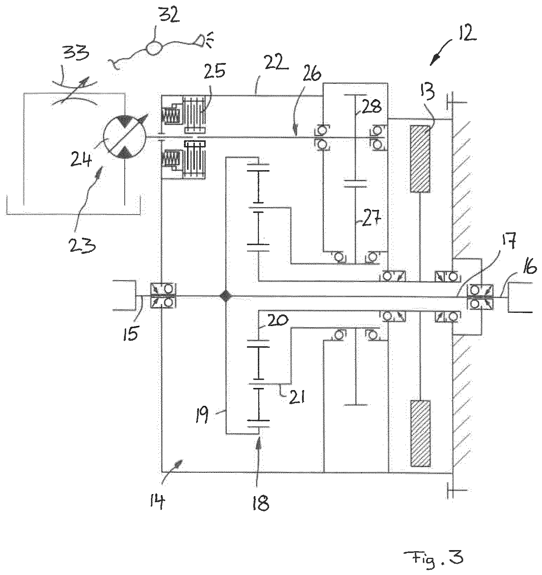

- Fig. 3:: eine Schnittansicht der Antriebsstrangbaugruppe umfassend den Schwungradspeicher und das Planetengetriebe nach einer weiteren Ausführung der Erfindung, bei der der Antriebs- und/oder Bremsaktor eine als Bremsmotor arbeitenden Antriebsmotor umfasst und auf eine energieversorgende Pumpe bzw. Generator verzichtet ist, und

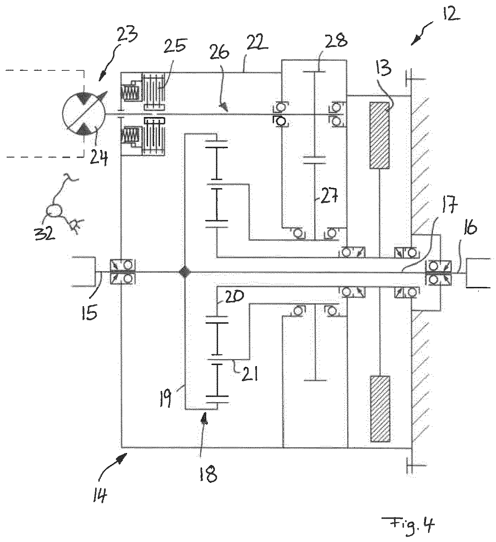

- Fig. 4:: eine Schnittansicht der Antriebsstrangbaugruppe umfassend den Schwungradspeicher und das Planetengetriebe nach einer weiteren Ausführung der Erfindung, wobei der Antriebs- und/oder Bremsaktor einen Antriebsmotor umfasst, der von einer externen Energieversorgung bzw. von der Antriebswelle her mit Energie versorgbar ist.

Wie Fig. 1 zeigt, kann die Arbeitsmaschine 1 eine landwirtschaftliche Maschine zum Bearbeiten von Erntegut oder ggf. auch zur Bodenbearbeitung ausgebildet sein, insbesondere in Form eines Anbaugeräts zum Anbau an einen Schlepper 2.

Die Arbeitsmaschine 1 umfasst dabei zumindest ein Arbeitsaggregat 3, das im Arbeitsbetrieb zyklisch stark schwankenden Belastungen unterworfen sein kann und/oder eine zyklisch stark schwankende Leistungsaufnahme zeigen kann. Wie Fig. 1 zeigt, kann die Arbeitsmaschine 1 insbesondere als Rechteck-Ballenpresse ausgebildet sein, deren Arbeitsaggregat 3 einen Stopfer 4 umfassen kann, der in eine Ballenformkammer 5 einfährt bzw. darin zyklisch hin und her bewegt wird, um vom Boden aufgenommenes Erntegut, das über eine geeignete Förderrichtung in die Ballenformkammer 5 gefördert wurde, zu Ballen zu verpressen.

Eine Antriebseinrichtung 6 zum Antreiben des Arbeitsaggregats 3 kann eine Stopfer-Kurbelwelle 7 umfassen, die den genannten Stopfer 4 über eine Pleuelstange 8 hin und her gehend antreiben kann.

Die genannte Antriebseinrichtung 6 kann einen mechanischen Antriebsstrang 9 umfassen, der von einer Antriebsquelle 10 rotatorisch angetrieben werden kann, wobei die genannte Antriebsquelle 10 insbesondere der Antriebsmotor des Schleppers 2 sein kann, der einerseits den Fahrantrieb des Schleppers 2 bilden und andererseits den Antriebsstrang 9 der Arbeitsmaschine 1 über die Zapfwelle des Schleppers 2 und eine daran angeschlossene Gelenkwelle 1 antreiben kann.

Um die beim Pressen der Ballen auftretenden Leistungsaufnahmeschwankungen der Antriebseinrichtung 6 abmildern bzw. von der Antriebsquelle 10 fernzuhalten, umfasst der genannte Antriebsstrang 9 der Arbeitsmaschine 1 eine Antriebsstrangbaugruppe 12, vgl. Fig. 1, die einen Schwungradspeicher 13 sowie ein Planetengetriebe 14 umfasst, über das der Schwungradspeicher 13 an den Antriebsstrang 9 angebunden ist, wie die Figuren 2-4 zeigen.

Der Schwungradspeicher 13 speichert im Arbeitsbetrieb der Arbeitsmaschine 1 kinetische Energie, die beim Pressen des Ballens bzw. einer auftretenden Leistungsspitze in das Arbeitsaggregat 3 fließt und Letzterem sozusagen zusätzlich zu der Antriebsleistung der Antriebsquelle 10 Schwung gibt, und umgekehrt in Betriebsphasen geringeren Leistungsbedarfs von der Antriebsquelle 10 her aufgeladen werden kann.

Wie die Figuren 2-4 zeigen, umfasst das Planetengetriebe 14 eine Getriebeeingangswelle 15, die an die Antriebsquelle 10 angebunden ist bzw. von der Antriebsquelle 10 her Drehmoment empfängt und angetrieben wird, beispielsweise über die genannte Gelenkwelle 11. Die Getriebeeingangswelle 15 ist durch das Planetengetriebe 14 hindurchgeführt zu einer Getriebeausgangswelle 16, die die Antriebseinrichtung 6 des Arbeitsaggregats 3 antreibt. Die Getriebedurchführung 17 kann über-/ untersetzungsfrei ausgebildet sein und beispielsweise von einer Durchtriebswelle gebildet sein, die den Getriebeeingang mit dem Getriebeausgang verbindet. Die Getriebeeingangswelle 15 kann mit der gleichen Drehzahl umlaufen wie die Getriebeausgangswelle 16.

Das Planetengetriebe 14 kann ein- oder mehrstufig ausgebildet sein, wobei die zumindest eine Planetengetriebestufe 18 den Schwungradspeicher 13 an den Antriebsstrang 9, insbesondere die genannte Getriebedurchführung 17 und/oder die Getriebeausgangswelle 16 anbindet.

Wie die Figuren zeigen, kann die Planetengetriebestufe 18 mit einem Hohlrad 19 an die Getriebeeingangswelle 16 angebunden sein, so dass das Hohlrad 19 mit der Eingangsdrehzahl umläuft.

Der Schwungradspeicher 13 kann an das Sonnenrad 20 angebunden bzw. damit drehfest verbunden sein.

Über den Planetenträger 21 kann das Über-/Untersetzungsverhältnis des Planetengetriebes 14 verstellt werden, wobei der genannte Planetenträger 21 drehbar gelagert ist, beispielsweise an dem Sonnenrad 20 und/oder an einem Planetengetriebegehäuse 22.

Um den Planetenträger 21 abbremsen und/oder beschleunigen zu können, ist ein Antriebs- und/oder Bremsaktor 23 vorgesehen, der einen Antriebsmotor 24 und/oder eine mechanische Bremse 25 umfassen kann.

Der genannte Antriebsmotor 24 kann ein Hydraulikmotor oder ein Elektromotor sein und je nach Ausbildung als Bremsmotor eingesetzt sein oder auch aktiv antreibend, d.h. den Planetenträger 21 beschleunigend eingesetzt sein.

Die genannte Bremse 25 kann je nach Verwendung verschieden ausgebildet sein, beispielsweise als Feststellbremse, die dem Planetenträger 21 am Planetengetriebegehäuse 22 festhalten kann, oder auch als Reibbremse, die die Drehzahl des Planetenträgers 21 vermindern kann. Beispielsweise kann die Bremse 25 eine Scheiben- oder Lamellenbremse sein, die in eine bremsende Stellung vorgespannt sein und durch Druckmittel gelöst werden kann.

Wie die Figuren zeigen, kann der Schwungradspeicher 13 und die zumindest eine Planetengetriebestufe 18 in einem gemeinsamen Planetengetriebegehäuse 22 untergebracht sein. Um kompakt zu bauen, kann es vorteilhaft sein, wenn die Planetengetriebestufe 18 mehr zur Eingangsseite des Planetengetriebes 14 und der Schwungradspeicher mehr zur Ausgangsseite des Planetengetriebes 14 hin angeordnet sind.

Vorteilhafterweise kann der Getriebestrang 26 zum Abbremsen und/oder Beschleunigen des Planetenträgers 21 in einem Bereich zwischen der Planetengetriebestufe 18 und dem Schwungradspeicher 13 angeordnet sein. Unabhängig hiervon kann der genannte Getriebestrang 26, der den Antriebs- und/oder Bremsaktor 23 mit dem Planetenträger 21 verbindet, ein drehfest mit dem Planetenträger 28 verbundenes Antriebsrad 27 umfassen, das zwischen dem Schwungradspeicher 13 und dem Sonnenrad 20 angeordnet sein kann. Unabhängig hiervon kann das Antriebsrad 27 mit einem weiteren Getrieberad 28 in Wälzeingriff stehen, das drehfest mit einer Antriebs- und/oder Bremswelle 29 verbunden ist, die sich radial außerhalb der Planetengetriebestufe 18 axial über diese hinweg erstrecken kann. Der Antriebs- und/oder Bremsaktor und das Planetenträger-Antriebsrad 27 können auf unterschiedlichen Seiten den Planetengetriebestufe 18 angeordnet sein, vgl. Figuren 2-4, um einerseits eine kompakte Bauweise zu erzielen und andererseits auch eine einfach zu wartende Montageposition für den Antriebs- und/oder Bremsaktor 23 zu haben.

Wie die Figuren zeigen, kann der Antriebs- und/oder Bremsaktor 23 an einer Stirnseite des Planetengetriebegehäuses 22 angeordnet sein, insbesondere auf dessen Eingangsseite.

Unabhängig von der Architektur des Planetengetriebes 14 kann der Antriebs- und/oder Bremsaktor 23 ein Planetengetriebeelement der zumindest einen Planetengetriebestufe 18, insbesondere dessen Planetenträger 21, abbremsen und/oder beschleunigen, um das Über-/Untersetzungsverhältnis des Planetengetriebes 14 und damit die Drehzahl des Schwungradspeichers 13 gegenüber der Drehzahl der Getriebeeingangs- und/oder Ausgangswellen 15, 16 zu verstellen.

Wie Fig. 2 zeigt, kann der Antriebs- und/oder Bremsaktor 23, insbesondere der genannte Antriebsmotor 24, von einem Energieerzeuger 29, der bei hydraulischer Ausbildung des Antriebs- und/oder Bremsaktors 23 eine Pumpe und bei elektrischer Ausbildung ein Generator sein kann, mit Energie versorgt werden, wobei der genannte Energieerzeuger 29 in die Antriebsstrangbaugruppe, insbesondere in das Planetengetriebe 14 integriert bzw. daran montiert sein kann. Wie Fig. 2 zeigt, kann der Energieerzeuger 29 über eine Getriebestufe 30, beispielsweise eine Stirnradgetriebestufe, an die Getriebeeingangswelle 15, insbesondere das Hohlrad 19 der Planetengetriebestufe 18, angebunden sein, so dass der Antriebsstrang 9 den Energieerzeuger 29 antreibt. Vorteilhafterweise kann der genannte Energieerzeuger 29 zusammen mit dem Antriebs- und/oder Bremsaktor 23 an derselben Getriebeseite, insbesondere der Stirnseite des Planetengetriebegehäuses 21, angeordnet sein, um eine kompakte Bauweise zu erzielen.

Um im stationären Zustand kein unnötiges Mitlaufen und damit Wirkungsgradverluste zu haben, kann eine Kupplung 31 zum Abkuppeln des Energieerzeugers 29 vom Antriebsstrang 9 vorgesehen sein.

Durch den Antriebs- und/oder Bremsaktor 23 und das hierdurch erreichbare Abbremsen und/oder Beschleunigen des verstellbaren Planetengetriebeelements, insbesondere des genannten Planetenträgers 21, kann eine Anfahrhilfe realisiert werden, um den Schwungradspeicher 13 auch mit begrenzter Antriebsleistung der Antriebsquelle 10 allmählich hochgefahren werden, ohne die Antriebsquelle 10 abzuwürgen. Alternativ oder zusätzlich kann durch Abbremsen und/oder Beschleunigen des genannten Planetengetriebeelements und damit Abbremsen und/oder Beschleunigen des Schwungradspeichers 13 eine feinere Abmilderung der Leistungsaufnahmeschwankungen des Arbeitsaggregats 3 in dessen Arbeitsbetrieb erreicht werden, wie nachfolgend erläutert wird.

Beim Anfahren der Arbeitsmaschine 1 wird dem Antriebsstrang 9 durch den daran angebundenen Energieerzeuger 29 Energie entzogen, wobei der genannte Energieerzeuger 29, wie Fig. 2 zeigt, über die Getriebestufe 30 vom Hohlrad 19 der Planetengetriebestufe 18 angetrieben werden kann. Der Energieerzeuger 29 speist den Motor 24 des Antriebs- und/oder Bremsaktors 23, und zwar derart, dass der Motor 24 als Bremsmotor arbeitet, d.h. im Bremsbetrieb betrieben wird und bei hydraulischer Ausbildung im Pumpenbetrieb arbeitet.

Hierdurch wird beim Hochfahren der Planetenträger 21 abgebremst. Durch die langsamer werdende Stegdrehzahl erhöht sich nach und nach die Drehzahl des Sonnenrads 20 und damit die Drehzahl des Schwungradspeicher 13.

Eine Sollbetriebsdrehzahl der Schwungmasse kann beispielsweise dadurch erreicht werden, dass der Planetenträger 28 auf die Drehzahl 0 herabgebremst wird, also am Planetengetriebegehäuse 22 festgehalten wird. In diesem Betriebszustand ergibt sich die Übersetzung des Planetengetriebes 14 durch Übersetzung der Hohlrad- und damit Eingangsdrehzahl durch die Planetenräder auf das Sonnenrad 20.

Durch das Zusammenspiel des Energieerzeugers 29 mit dem Antriebs- und/oder Bremsaktor 23 kann also ein allmähliches Hochfahren des Schwungradspeichers 13 erzielt werden, ohne eine Rutschkupplung zu benötigen.

Ist der Planetenträger 21 auf die Drehzahl 0 herabgebremst, kann die mechanische Bremse 25 betätigt werden bzw. festgestellt werden, um den Planetenträger 21 am Gehäuse 22 festzuhalten. Hierdurch muss der Motor 24 nach dem Anlauf- bzw. Hochlaufvorgang nicht mehr aktiv gehalten werden und er benötigt keine Energie mehr vom Energieerzeuger 29.

Insbesondere kann nach dem Hochlaufvorgang der Energieerzeuger 29 über die Kupplung 31 vom Antriebsstrang 9 abgetrennt werden, um nicht unnötig mitzulaufen und keine Leerlaufverluste zu haben.

Die genannte Bremse 25 kann im hochgefahrenen Arbeitsbetrieb der Antriebsstrangbaugruppe als Überlastschutz für den Schwungradspeicher 13 dienen. Bei einer Blockade im Antriebsstrang 9 oder auch bei einer Überlastung des Arbeitsaggregats 3 kann durch Durchrutschen der Bremse 25 das durch die Schwungmasse erzeugte Drehmoment abfließen, wobei die Schwelle für das Betätigen des Überlastschutzes durch Einstellen der Bremskraft eingestellt werden kann. Insbesondere kann die Bremse 25 so eingestellt werden, dass beim Auftreten eines bestimmten Grenzmoments die Bremse 25 durchrutscht.

Alternativ oder zusätzlich zu der beschriebenen Anfahrhilfe kann die Anbindung des Schwungradspeichers 13 an den Antriebsstrang 9 über das Planetengetriebe 14 aber auch dazu genutzt werden, eine nochmals feinere Kompensierung von Drehmoment- bzw. Leistungsaufnahmeschwankungen des Arbeitsaggregats 3 zu erzielen.

Insbesondere kann der Motor 24 das Planetengetriebeelement, insbesondere den Planetenträger 21, in Betriebsphasen geringerer Leistungsaufnahme so beschleunigen und/oder abbremsen, dass der Schwungradspeicher 13 eine erhöhte Drehzahl erhält, ggf. auch über seine an sich vorgesehene Soll-Betriebszahl hinaus überdreht wird. Beispielsweise kann der Planetenträger 21 in negativer Richtung angetrieben werden, um das Über-/Untersetzungsverhältnis so weiter zu verschieben, dass der Schwungradspeicher 13 beschleunigt wird. Die kinetische Energie, die bei dieser erhöhten Drehzahl vorhanden ist, kann der Schwungradspeicher 13 dann in einer Betriebsphase höherer Leistungsaufnahme des Arbeitsaggregat 3 wieder in den Antriebsstrang 9 zurückspeisen, um den Drehmomentbedarf zu decken bzw. den Drehmomentstoß von der Antriebsquelle 10 fernzuhalten.

Bei einer Arbeitsmaschine 1 mit zyklischen Drehmomentstößen bzw. zyklischen Leistungsaufnahmeschwankungen, wie sie bei einer Rechteck-Ballenpresse auftreten, kann die Planetengetriebestufe 18 insofern zyklisch hinsichtlich ihres Unter-/Übersetzungsverhältnisses hin- und herverstellt werden, um eine nochmals verfeinerte Glättung des Energiebedarfs des Arbeitsaggregats 3 zu erzielen. Beispielsweise wird beim Zusammenpressen eines Erntegutballens durch Einfahren des Stopfers 4 dessen hohe Presskraft und somit auch die dafür notwendige Energie nur sehr punktuell über beispielsweise 10 Winkelgrad der Stopfer-Kurbelwelle 7 benötigt, sodass über die restlichen 350 Winkelgrad der Schwungradspeicher 13 durch den Antriebsmotor 24 beschleunigt werden kann, insbesondere indem der Planetenträger 21 in die negative Richtung angetrieben wird und der Schwungradspeicher 13 sozusagen überdreht wird. Die hierdurch gesammelte Energie kann für den kurzen Augenblick des Ballenpressens wieder abgegeben werden, wobei dann im Weiteren über die erneuten 350 Winkelgrad der Stopfer-Kurbelwelle 7 wieder Energie durch höheres Drehen der Schwungmasse gesammelt werden kann. Hierdurch kann eine zusätzliche Entlastung und Gleichförmigkeit des Betriebs der Antriebsquelle 10 und damit des Schlepperbetriebs erzielt werden.

Um das beschriebene Hochfahren der Schwungradmasse in Betriebsphasen niedrigerer Leistungsaufnahmen und die Energieabgabe und damit ein Abbremsen des Schwungradspeichers in Betriebsphasen erhöhter Leistungsaufnahme zu erzielen, können die Energieerzeuger 29 und der Motor 24 und die Schwungmasse des Schwungradspeichers 13 derart aufeinander abgestimmt werden, dass die Drehmomentsumme aus den drei zusammenwirkenden Getriebeelementen im Gleichgewicht gehalten wird, insbesondere 0 gehalten wird.

Je nach Ausbildung des Systems kann auch eine elektronische Steuereinrichtung 32 vorgesehen sein, die beispielsweise durch Verstellung des Motors 24 das gewünschte Hochfahren der Schwungmasse in Betriebsphasen niedrigeren Leistungsbedarfs vornimmt, wobei die Steuereinrichtung 32 in der eingangs schon beschriebenen Weise über eine Erfassungseinrichtung die Leistungsschwankungen erfassen bzw. bestimmen und in Abhängigkeit des die Leistungsschwankungen charakterisierenden Signals bzw. Parameters den Motor 24 ansteuern kann.

Wie Figur 3 zeigt, kann auf den Energieerzeuger 29 ggf. auch verzichtet sein, wobei der Motor 24 des Antriebs- und/oder Bremsaktors 23 ggf. nur als Bremsmotor arbeiten kann, wobei die Bremskraft des Motors 24 ggf. über eine einstellbare Drossel 33 gesteuert werden kann.

Wie Figur 4 zeigt, kann der Motor 24 auch extern mit Energie versorgt werden, beispielsweise vom Schlepper 2 her. Durch Ansteuern des Motors 24 mittels der Steuereinrichtung 32 kann auch in diesem Fall sowohl die Anfahrhilfe als auch die verfeinerte Glättung des Energiebedarfs im Arbeitsbetrieb erzielt werden.

Zum Abschalten des Antriebs bzw. des Arbeitsaggregats und dem damit einhergehenden Abbauen der kinetischen Energie des Schwungradspeichers 13 kann vorteilhafterweise ein im Zapfwellen- bzw. Antriebsstrang vorgesehener Freilauf genutzt werden, durch den sich die gespeicherten Energien in der Schwungmasse abbauen können. Der Auslaufvorgang benötigt dabei ein wenig Zeit, aber durch die mechanischen Reibungsverluste im Antriebsstrang kann die Energie der Schwungmasse selbständig abgebaut werden. Im Falle, dass der Ausschaltvorgang zu lange dauert, wird die zuvor beschriebene Vorgehensweise des Hochfahrens umgedreht, d. h. der Motor 24 kann den Planetensteg 21 wieder antreiben, so dass die Schwungmasse 13 langsamer wird. Dabei wird die frei werdende Energie abgeführt.

Damit beinhaltet der vorstehend beschriebene Gegenstand unabhängig voneinander folgende vorteilhafte Aspekte:
- Einen Schwungmassenspeicher mit einem Planetengetriebe in einem Antriebsstrang einer Ballenpresse.
- Die Koppelung des Hohlrades mit dem durchlaufenden Antriebsstrang, beispielsweise der Zapfwelle der Antriebsmaschine.
- Die Befestigung der Schwungmasse am Sonnenrad.
- Der Planetensteg kann anfänglich frei umlaufen, somit wird die Schwungmasse am Sonnenrad nicht beschleunigt (der Motor läuft leer mit).
- Der Hochlaufvorgang der Schwungmasse über die Drehzahlreduzierung des Steges des Planetengetriebes.
- Über ein Stirnradgetriebe Antreiben einer Pumpe oder eines Generators und Übertragung der Energie auf einen Motor, welcher die Stegdrehzahl reduziert.
- Durch die Reduktion der Stegdrehzahl erhöht sich die Drehzahl des Sonnenrades und dadurch die Drehzahl der Schwungmasse.
- Nach Abschluss der Hochlaufphase kann der Strang des Hydraulik- oder Elektromotors durch eine Haltebremse festgebremst werden, damit wird der Motor entlastet wird und im Betrieb nicht mitlaufen braucht, und Leerlaufverluste reduziert werden können.
- Die Bremse kann weggelassen werden, insbesondere wenn die Motorwelle, bzw. der Motor in der Rotation festgehalten werden kann.
- Die Pumpe bzw. der Generator kann vom Antriebsstrang abgekuppelt werden, um während des Betriebes nicht mitzulaufen.
- Die Bremse kann als Überlastschutz bei Blockaden im Antriebsstrang wirken und kann auf einen Schwellwert zum Rutschen eingestellt werden. (Bremse gleich Rutschkupplung).
- Optional kann die Bremse, durch Veränderung des Lüftdruckes auch während des Betriebes auf verschiedene Schwellwerte eingestellt werden.
- Der zur Reduktion der Drehzahl des Planetenstegs vorgesehene Motor kann auch direkt über die das Arbeitsaggregat antreibende Antriebsquelle mit Energie versorgt werden, und die Pumpe bzw. der Generator in der Antriebsstrangbaugruppe kann entfallen (externe Energieversorgung).
- Der Hydraulik- bzw. Elektromotor arbeitet als Retarder.
- Bei Verwendung einer ausreichend dimensionierten Rutschkupplung zur Aufnahme der Hochlaufenergien können Pumpe und Motor entfallen.
- Durch kurzzeitiges Beschleunigen der Schwungmasse innerhalb der drehmomentreduzierten Betriebsphase des Aggregats bzw. der drehmomentreduzierten Umfangsbahn, (bis zur Abgabe der notwendigen Energie innerhalb ca. 10°), kann zusätzlich eine bessere Energieglättung für den Antriebsstrang stattfinden.

## Patentansprüche

1. Antriebsstrangbaugruppe zum Antreiben eines Arbeitsaggregats (3) mit schwankender Leistungsaufnahme von einer Antriebsquelle (10) her, mit einem Schwungradspeicher (13) zum Abmildern von Laststößen und/oder Leistungsaufnahmeschwankungen, sowie einer Anfahrhilfe zum erleichterten Hochfahren des Schwungradspeichers (13) in einen Solldrehzahlbereich, wobei die Anfahrhilfe ein Planetengetriebe (14) umfasst, das zumindest eine mit dem Schwungradspeicher (13) antriebsverbundene Planetengetriebestufe (18) aufweist, **dadurch gekennzeichnet, dass** das genannte Planetengetriebe (14) einen Durchtrieb umfasst, der unter Umgehung der Planetengetriebestufe (18) von der Planetengetriebeeingangsseite zu einer Abtriebswelle (16) führt, die vom Planetengetriebe (14) zum Arbeitsaggregat (3) führt, wobei der genannte Schwungradspeicher (13) über die besagte Planetengetriebestufe (18) gegenüber dem genannten Durchtrieb verzweigt ist und in seiner Drehzahl gegenüber der Antriebsdrehzahl der zum Arbeitsaggregat (3) führenden Abtriebswelle (16) variierbar ist, wobei das Planetengetriebe (14) einen Antriebs- und/oder Bremsaktor (23) zum Abbremsen und/oder Beschleunigen eines Planetengetriebeelements zum Verstellen des Über-/Untersetzungsverhältnisses der zumindest einen Planetengetriebestufe (18) beim Hochfahren des Schwungradspeichers (13) in dessen Soll-Betriebsdrehzahlbereich umfasst.

2. Antriebsstrangbaugruppe zum Antreiben eines Arbeitsaggregats (3) mit schwankender Leistungsaufnahme von einer Antriebswelle (10) her, mit einem Schwungradspeicher (13) zum Abmildern von Laststößen und/oder Leistungsaufnahmeschwankungen des Arbeitsaggregats (3), sowie einer Steuereinrichtung (32) zum Steuern des Schwungradspeichers (13), **dadurch gekennzeichnet, dass** die Steuereinrichtung (32) ein Planetengetriebe (14), das zumindest eine mit dem Schwungradspeicher (13) antriebsverbundene Planetengetriebestufe (18) aufweist, sowie einen Antriebs- und/oder Bremsaktor (23) zum Abbremsen und/oder Beschleunigen eines Planetengetriebeelements zum Verstellen des Über-/Untersetzungsverhältnisses der Planetengetriebestufe (18) umfasst, wobei die Steuereinrichtung (32) dazu ausgebildet ist, den Antriebs- und/oder Bremsaktor (23) in Abhängigkeit der Laststöße und/oder Leistungsaufnahmeschwankungen des Arbeitsaggregats (3) derart zu betätigen, dass in Betriebsphasen niedrigerer Leistungsaufnahme des Arbeitsaggregats (3) der Schwungradspeicher (13) durch Verstellen des Über-/Untersetzungsverhältnisses der Planetengetriebestufe (18) beschleunigt und in Betriebsphasen höherer Leistungsaufnahme des Arbeitsaggregats (3) unter Verstellen des Über-/Untersetzungsverhältnisses der Planetengetriebestufe (18) abgebremst wird, und über die genannten Betriebsphasen niedrigerer und höherer Leistungsaufnahme hinweg eine Eingangsdrehzahl und/oder ein Eingangsmoment an einer von der Antriebsquelle (10) her angetriebenen Eingangswelle (16) des Planetengetriebes (14) zumindest näherungsweise konstant gehalten wird.

3. Antriebsstrangbaugruppe nach einem der vorhergehenden Ansprüche, wobei der Antriebs- und/oder Bremsaktor (23) einen hydraulischen oder elektrischen Motor (24) zum Abbremsen und/oder Beschleunigen des Planetengetriebeelements aufweist.

4. Antriebsstrangbaugruppe nach einem der vorhergehenden Ansprüche, wobei ein Energieversorger (29) zur Energieversorgung des Antriebs- und/oder Bremsaktors (23) vorgesehen, insbesondere in das Planetengetriebe (14) integriert ist, und an eine Getriebeeingangs- und/oder -ausgangswelle (15, 16) zum Antreiben des Energieerzeugers (29) angebunden ist, so dass der Antriebs- und/oder Bremsaktor (23) mit zunehmender Antriebsdrehzahl beim Hochfahren der Antriebsbaugruppe zunehmend mit Energie versorgt wird, wobei der Energieerzeuger (29) mit einem Planetengetriebeelement, insbesondere einem Hohlrad (19) der Planetengetriebestufe (18), antriebsverbunden ist, das mit einer Eingangsdrehzahl der Planetengetriebestufe (18) rotiert, wobei der Energieerzeuger (29) durch eine Getriebestufe (30) mit dem genannten Planetengetriebelement antriebsverbunden ist, wobei der Energieerzeuger (29) durch eine Kupplung (31) ein- und auskuppelbar ist, wobei die Kupplung (31) dazu konfiguriert ist und angesteuert ist, bei oder nach Erreichen des Sollbetriebsdrehzahlbereichs des Schwungradspeichers (13) auszukuppeln.

5. Antriebsstrangbaugruppe nach einem der vorhergehenden Ansprüche, wobei der Antriebs- und/oder Bremsaktor (23) von dem Energieerzeuger (29) beim Anfahren der Antriebsstrangbaugruppe derart mit Energie versorgt wird, dass der Antriebs- und/oder Bremsaktor (23) das Planetengetriebeelement nach und nach abbremst und hierdurch das Über-/Untersetzungsverhältnis der Planetengetriebestufe (18) verstellt und hierdurch die Drehzahl des Schwungradspeichers (13) nach und nach erhöht.

6. Antriebsstrangbaugruppe nach einem der vorhergehenden Ansprüche, wobei der Motor (24) des Antriebs- und/oder Bremsaktors (23) beim Hochfahren des Schwungradspeichers (13) als Bremsmotor arbeitet und/oder als reiner Bremsmotor ausgebildet ist, wobei dem Bremsmotor eine steuerbare Drossel (33) zum Einstellen des Bremsmoments zugeordnet ist.

7. Antriebsstrangbaugruppe nach einem der vorhergehenden Ansprüche, wobei die Bremse (25) des Antriebs- und/oder Bremsaktors (23) dazu vorgesehen und ausgebildet ist, das Planetengetriebeelement zum Verstellen des Über-/Untersetzungsverhältnisses der Planetengetriebestufe (18) im stationären Arbeitsbetrieb festzustellen, insbesondere an einem Getriebegehäuse festzuhalten.

8. Antriebsstrangbaugruppe nach einem der vorhergehenden Ansprüche, wobei die Bremse (25) des Antriebs- und/oder Bremsaktors (23) dazu vorgesehen und ausgebildet ist, im Arbeitsbetrieb einen Überlastschutz zu bilden und bei Erreichen eines vorbestimmten Grenzmoments durchzurutschen.

9. Antriebsstrangbaugruppe nach einem der vorhergehenden Ansprüche, wobei die Anfahrhilfe frei von Rutschkupplungen und/oder beim Hochfahren ohne Rutschkupplungen arbeitend ausgebildet ist.

10. Antriebsstrangbaugruppe nach einem der vorhergehenden Ansprüche, wobei der Schwungradspeicher (13), das Planetengetriebe (14) und der Antriebs- und/oder Bremsaktor (23) eine vormontierte Montagebaugruppe bilden, die Eingangs- und Ausgangswellenanschlüsse zum Anschließen an den Antriebsstrang (9) zum Antreiben des Arbeitsaggregats (3) aufweist und hierdurch vormontiert in den genannten Antriebsstrang (9) einbaubar ist.

11. Antriebsstrangbaugruppe nach einem der vorhergehenden Ansprüche, wobei die Planetengetriebestufe (18) im Planetengetriebegehäuse (22) näher zur Getriebeeingangsseite und der Schwungradspeicher (13) in dem Planetengetriebegehäuse (22) näher zur Ausgangsseite hin untergebracht sind.

12. Antriebsstrangbaugruppe nach einem der vorhergehenden Ansprüche, wobei der Antriebs- und/oder Bremsaktor (23) und ggf. der Energieerzeuger (29) an einer Getriebeeingangsseite angebracht sind.

13. Antriebsstrangbaugruppe nach einem der vorhergehenden Ansprüche, wobei der Antriebs- und/oder Bremsaktor (23) mit dem Planetengetriebeelement zum Verstellen des Über-/Untersetzungsverhältnisses durch einen Getriebestrang (26) verbunden ist, der sich axial über die Planetengetriebestufe (18) hinweg erstreckt und/oder sich zumindest teilweise zwischen der Planetengetriebestufe (18) und dem Schwungradspeicher (13) erstreckt.

14. Arbeitsmaschine mit einer Antriebsstrangbaugruppe (12), die gemäß einem der vorhergehenden Ansprüche ausgebildet ist.

15. Arbeitsmaschine nach dem vorhergehenden Anspruch, die als landwirtschaftliche Ernte- oder Bodenbearbeitungsmaschine, insbesondere als Rechteck-Ballenpresse, sowie als Anbaugerät zum Anbau an ein Zugfahrzeug ausgebildet ist, wobei die Antriebsstrangbaugruppe (12) über einen mechanischen Antriebsstrang (9) an die am Zugfahrzeug befindliche Antriebsquelle (10) ankuppelbar ist.

## Claims

1. Drive train assembly for driving a working unit (3) with fluctuating power consumption from a drive source (10), comprising a flywheel accumulator (13) for mitigating load impacts and/or power consumption fluctuations, and a starting aid for easier starting up of the flywheel accumulator (13) into a desired speed range, wherein the starting aid comprises a planetary transmission (14) which comprises at least one planetary transmission stage (18), which is connected in terms of drive to the flywheel accumulator (13), **characterized in that** the planetary transmission (14) comprises a fixed drive, which, bypassing the planetary transmission stage (18), leads from the planetary transmission input side to an output shaft (16), which leads from the planetary transmission (14) to the working unit (3), wherein said flywheel accumulator (13) is branched with respect to said fix drive via the planetary transmission stage (18), and is variable in speed with respect to the drive speed of the output shaft (16), which leads to the working unit (3), wherein the planetary transmission (14) comprises a drive and/or brake actuator (23) for braking and/or accelerating a planetary transmission element in order to adjust the step-up/step-down ratio of the at least one planetary transmission stage (18) when starting up the flywheel accumulator (13) into its desired speed range.

2. Drive train assembly for driving a working unit (3) with fluctuating power consumption from a drive source (10), comprising a flywheel accumulator (13) for mitigating load impacts and/or power consumption fluctuations of the working unit (3), as well as a control device (32) for controlling the flywheel accumulator (13), **characterized in that** the control device (32) comprises a planetary transmission (14), which comprises at least one planetary transmission stage (18), which is connected in terms of drive to the flywheel accumulator (13), and a drive and/or brake actuator (23) for braking and/or accelerating a planetary transmission element in order to adjust the step-up/step-down ratio of the planetary transmission stage (18), wherein the control device (32) is configured to actuate the drive and/or brake actuator (23) depending on the load impacts and/or power consumption fluctuations of the working unit (3) in such a way, that in the operating phases of lower power consumption of the working unit (3) the flywheel accumulator (13) is accelerated by adjusting the step-up/step-down ratio of the planetary transmission stage (18) and in operating phases of higher power consumption of the working unit (3) is braked by adjusting the step-up/step-down ratio of the planetary transmission stage (18), and an input speed and/or an input torque at an input shaft (16) of the planetary transmission (14) driven from the drive source (10) is kept at least approximately constant throughout said operating phases of lower and higher power consumption.

3. Drive train assembly according to any one of the preceding claims, wherein the drive and/or brake actuator (23) comprises a hydraulic or electrical motor (24) for braking and/or accelerating the planetary transmission element.

4. Drive train assembly according to any one of the preceding claims, wherein an energy supplier (29) for supplying energy to the drive and/or brake actuator (23) is provided, in particular integrated into the planetary transmission (14), and is connected to a transmission input and/or output shaft (15, 16) for driving the energy supplier (29) so that the drive and/or brake actuator (23) is increasingly supplied with energy as the drive speed increases when starting up the drive assembly, wherein the energy supplier (29) is connected in terms of drive to a planetary transmission element, in particular a ring gear (19) of the planetary transmission stage (18), which rotates at an input speed of the planetary transmission stage (18), wherein the energy generator (29) is connected in terms of drive to said planetary transmission element through a gear stage (30), wherein the energy generator (29) is engageable and disengageable by a clutch (31), the clutch (31) being configured and controlled to disengage upon or after the flywheel accumulator (13) reaches the desired operating speed range.

5. Drive train assembly according to any one of the preceding claims, wherein the drive and/or brake actuator (23) is supplied with energy from the energy generator (29) when starting up the drive train assembly in such a manner that the drive and/or brake actuator (23) gradually brakes the planetary transmission element and thereby adjusts the step-up/step-down ratio of the planetary transmission stage (18) and thereby gradually increases the speed of the flywheel accumulator (13).

6. Drive train assembly according to any one of the preceding claims, wherein, when starting up the flywheel accumulator (13), the motor (24) of the drive and/or brake actuator (23) operates as a brake motor and/or is configured as a pure brake motor, wherein a controllable throttle (33) is associated with the brake motor for setting the braking torque.

7. Drive train assembly according to any one of the preceding claims, wherein the brake (25) of the drive and/or brake actuator (23) is provided and configured to lock the planetary transmission element for adjusting the step-up/step-down ratio of the planetary transmission stage (18) in stationary working mode, in particular to hold it in place at the transmission housing.

8. Drive train assembly according to any one of the preceding claims, wherein the brake (25) of the drive and/or brake actuator (23) is provided and configured to provide overload protection in working mode and to slip when a predetermined limit torque is reached.

9. Drive train assembly according to any one of the preceding claims, wherein the starting aid is configured to operate without slipping clutches and/or to operate without slipping clutches when starting up.

10. Drive train assembly according to any one of the preceding claims, wherein the flywheel accumulator (13), the planetary transmission (14) and the drive and/or brake actuator (23) form a pre-assembled mounting assembly having input and output shaft connections for connection to the drive train (9) for driving the working unit (3) and thereby being pre-assembled into said drive train (9).

11. Drive train assembly according to any one of the preceding claims, wherein the planetary transmission stage (18) is accommodated in the planetary transmission housing (22) closer to the transmission input side and the flywheel accumulator (13) is accommodated in the planetary transmission housing (22) closer to the output side.

12. Drive train assembly according to any one of the preceding claims, wherein the drive and/or brake actuator (23) and optionally the energy generator (29) are mounted on a transmission input side.

13. Drive train assembly according to any one of the preceding claims, wherein the drive and/or brake actuator (23) is connected to the planetary transmission element in order to adjust the step-up/step-down ratio by a gear train (26) which extends axially across the planetary transmission stage (18) and/or extends at least partially between the planetary transmission stage (18) and the flywheel accumulator (13).

14. Working machine, comprising a drive train assembly (12) which is configured according to any one of the preceding claims.

15. Working machine according to the preceding claim, configured as an agricultural harvesting or soil working machine, in particular as a rectangular baler, and as an attachment device for mounting on a towing vehicle, wherein the drive train assembly (12) can be coupled to the drive source (10) located on the towing vehicle via a mechanical drive train (9).

## Revendications

1. Module de chaîne cinématique destiné à entraîner un groupe de travail (3) avec une puissance absorbée fluctuante depuis une source d'entraînement (10), avec un accumulateur à volant d'inertie (13) destiné à atténuer des chocs de charge et/ou des fluctuations de puissance absorbée, ainsi qu'une aide au démarrage destinée à faciliter la montée en puissance de l'accumulateur à volant d'inertie (13) dans une plage de vitesses de rotation théoriques, dans lequel l'aide au démarrage comprend un engrenage planétaire (14), qui présente au moins un étage à engrenages planétaires (18) relié en entraînement à l'accumulateur à volant d'inertie (13), **caractérisé en ce que** ledit engrenage planétaire (14) comprend une prise directe, qui mène, en contournant l'étage à engrenages planétaires (18), du côté d'entrée d'engrenage planétaire à un arbre de sortie (16), qui mène de l'engrenage planétaire (14) au module de travail (3), dans lequel ledit accumulateur à volant d'inertie (13) est ramifié par l'intermédiaire dudit étage à engrenages planétaires (18) par rapport à ladite prise directe et sa vitesse de rotation peut varier par rapport à une vitesse de rotation d'entraînement de l'arbre de sortie (16) menant au groupe de travail (3), dans lequel l'engrenage planétaire (14) comprend un actionneur d'entraînement et/ou de freinage (23) destiné à ralentir et/ou à accélérer un élément d'engrenage planétaire pour ajuster le rapport de démultiplication/réduction de l'autre moins un étage à engrenages planétaires (18) lors de la montée en puissance de l'accumulateur à volant d'inertie (13) dans sa plage de vitesses de rotation de fonctionnement de consigne.

2. Module de chaîne cinématique destiné à entraîner un groupe de travail (3) avec une puissance absorbée fluctuante depuis un arbre d'entraînement (10), avec un accumulateur à volant d'inertie (13) destiné à atténuer des coups de charge et/ou des fluctuations de puissance absorbée du groupe de travail (3), ainsi qu'un dispositif de commande (32) destiné à commander l'accumulateur à volant d'inertie (13), **caractérisé en ce que** le dispositif de commande (32) comprend un engrenage planétaire (14), qui présente au moins un étage à engrenages planétaires (18) relié en entraînement à l'accumulateur à volant d'inertie (13), ainsi qu'un actionneur d'entraînement et/ou de freinage (23) destiné à ralentir et/ou à accélérer un élément d'engrenage planétaire pour ajuster le rapport de démultiplication/de réduction de l'étage à engrenages planétaires (18), dans lequel le dispositif de commande (32) est réalisé pour actionner l'actionneur d'entraînement et/ou de freinage (23) en fonction des coups de charge et/ou des fluctuations de puissance absorbée du groupe de travail (3) de telle manière que dans des phases de fonctionnement à puissance absorbée plus basse du groupe de travail (3), l'accumulateur à volant d'inertie (13) est accéléré par ajustement du rapport de démultiplication/de réduction de l'étage à engrenages planétaires (18) et est ralenti par ajustement du rapport de démultiplication/de réduction de l'étage à engrenages planétaires (18) dans des phases de fonctionnement à puissance absorbée plus élevée du groupe de travail (3), et une vitesse de rotation d'entrée et/ou un couple d'entrée sont maintenus au moins approximativement constants sur un arbre d'entrée (16) de l'engrenage planétaire (14) entraîné depuis la source d'entraînement (10) au-delà desdites phases de fonctionnement à puissance absorbée plus basse et plus élevée.

3. Module de chaîne cinématique selon l'une quelconque des revendications précédentes, dans lequel l'actionneur d'entraînement et/ou de freinage (23) présente un moteur (24) hydraulique ou électrique destiné à ralentir et/ou à accélérer l'élément d'engrenage planétaire.

4. Module de chaîne cinématique selon l'une quelconque des revendications précédentes, dans lequel un fournisseur d'énergie (29) est prévu pour fournir de l'énergie à l'actionneur d'entraînement et/ou de freinage (23), en particulier est intégré dans l'engrenage planétaire (14) et est rattaché à un arbre d'entrée et/ou de sortie d'engrenage (15, 16) pour entraîner le producteur d'énergie (29) de telle sorte que l'actionneur d'entraînement et/ou de freinage (23) est alimenté en énergie de manière croissante à mesure que la vitesse de rotation d'entraînement lors de la montée en puissance du module d'entraînement augmente, dans lequel le producteur d'énergie (29) est relié en entraînement à un élément d'engrenage planétaire, en particulier à une couronne (19) de l'étage à engrenages planétaires (18), qui tourne à une vitesse de rotation d'entrée de l'étage à engrenages planétaires (18), dans lequel le producteur d'énergie (29) est relié en entraînement audit élément d'engrenage planétaire par un étage à engrenages (30), dans lequel le producteur d'énergie (29) peut être couplé et découplé par un système d'accouplement (31), dans lequel le système d'accouplement (31) est configuré et piloté pour le découplage lors de ou après l'atteinte de la plage de vitesses de rotation de fonctionnement de consigne de l'accumulateur à volant d'inertie (13).

5. Module de chaîne cinématique selon l'une quelconque des revendications précédentes, dans lequel l'actionneur d'entraînement et/ou de freinage (23) est alimenté en énergie par le producteur d'énergie (29) lors du démarrage du module de chaîne cinématique de telle manière que l'actionneur d'entraînement et/ou de freinage (23) ralentit peu à peu l'élément d'engrenage planétaire et ajuste ce faisant le rapport de démultiplication/de réduction de l'étage à engrenages planétaires (18) et augmente ainsi peu à peu la vitesse de rotation de l'accumulateur à volant d'inertie (13).

6. Module de chaîne cinématique selon l'une quelconque des revendications précédentes, dans lequel le moteur (24) de l'actionneur d'entraînement et/ou de freinage (23) fonctionne en tant que moteur de freinage et/ou est réalisé en tant que moteur pur de freinage lors de la montée en puissance de l'accumulateur à volant d'inertie (13), dans lequel un système d'étranglement (33) pouvant être commandé destiné à régler le couple de freinage est associé au moteur de freinage.

7. Module de chaîne cinématique selon l'une quelconque des revendications précédentes, dans lequel le frein (25) de l'actionneur d'entraînement et/ou de freinage (23) est prévu et réalisé pour immobiliser l'élément d'engrenage planétaire destiné à ajuster le rapport de démultiplication/de réduction de l'étage à engrenages planétaires (18) dans le mode de travail stationnaire, en particulier pour le retenir sur un boîtier d'engrenage.

8. Module de chaîne cinématique selon l'une quelconque des revendications précédentes, dans lequel le frein (25) de l'actionneur d'entraînement et/ou de freinage (23) est prévu et réalisé pour former, dans le mode de travail, une protection contre les surcharges et pour glisser lorsqu'un couple limite prédéfini est atteint.

9. Module de chaîne cinématique selon l'une quelconque des revendications précédentes, dans lequel l'aide au démarrage est réalisée sans accouplement à glissement et/ou de manière à fonctionner sans accouplement à glissement lors de la montée en puissance.

10. Module de chaîne cinématique selon l'une quelconque des revendications précédentes, dans lequel l'accumulateur à volant d'inertie (13), l'engrenage planétaire (14) et l'actionneur d'entraînement et/ou de freinage (23) forment un module de montage prémonté, qui présente des raccords d'arbres d'entrée et de sortie destinés à être raccordés à la chaîne cinématique (9) pour entraîner le groupe de travail (3) et peut être intégré ce faisant de manière prémontée dans ladite chaîne cinématique (9).

11. Module de chaîne cinématique selon l'une quelconque des revendications précédentes, dans lequel l'étage à engrenages planétaires (18) est logé davantage à proximité du côté d'entrée d'engrenage dans le carter d'engrenage planétaire (22) et l'accumulateur à volant d'inertie (13) est logé davantage à proximité du côté de sortie dans le carter d'engrenage planétaire (22).

12. Module de chaîne cinématique selon l'une quelconque des revendications précédentes, dans lequel l'actionneur d'entraînement et/ou de freinage (23) et éventuellement le producteur d'énergie (29) sont installés sur un côté d'entrée d'engrenage.

13. Module de chaîne cinématique selon l'une quelconque des revendications précédentes, dans lequel l'actionneur d'entraînement et/ou de freinage (23) est relié à l'élément d'engrenage planétaire destiné à ajuster le rapport de démultiplication/de réduction par une chaîne cinématique (26), qui s'étend axialement au-delà de l'étage à engrenages planétaires (18) et/ou s'étend au moins en partie entre l'étage à engrenages planétaires (18) et l'accumulateur à volant d'inertie (13).

14. Machine de travail avec un module de chaîne cinématique (12), qui est réalisé selon l'une quelconque des revendications précédentes.

15. Machine de travail selon la revendication précédente, qui est réalisée en tant qu'une machine agricole de récolte ou de travail du sol, en particulier en tant que presse à balles rectangulaires ainsi qu'en tant appareil rapporté destiné à être installé sur un véhicule de traction, dans laquelle le module de chaîne cinématique (12) peut être accouplé à la source d'entraînement (10) se trouvant sur le véhicule de traction par l'intermédiaire d'une chaîne cinématique (9) mécanique.
